# DEMANDE DE BREVET EUROPEEN

(11) **EP 0 801 912 A2**
(43) Date de publication de la demande: **22.10.1997**
(21) Numéro de dépôt: 97870051.6
(22) Date de dépôt: 18.04.1997
(51) Int. Cl.: A47B 87/02, F16B 12/26

(54) **Présentoir modulaire**

(30) Priorité: 18.04.1996 BE 9600342
(71) Demandeur: Editions Dupuis S.A., 6001 Marcinelle (BE)
(72) Inventeur: Bernard, Gillon, 6110 Montigny Le Tilleul (BE)
(74) Mandataire: Quintelier, Claude

(57) **Abrégé**

Présentoir modulaire comprenant au moins deux modules de construction ayant chacun une paroi (5-4) de fond et une ouverture d'accès, qui s'étend de façon contiguë sur une première paroi (3) horizontale opposée à la paroi de fond et une deuxième paroi (4) transversale, ladite caisse comprenant également une troisième paroi (5-2) transversale opposée à ladite deuxième paroi, ainsi qu'une quatrième (5-1) et cinquième (5-3) paroi latérale, ladite troisième, quatrième et cinquième paroi étant chacune pourvue de rebords (6), chaque rebord étant pourvu de premiers moyens de fixation comprenant un premier élément de liaison, et agencés pour relier entre eux les parois de la caisse, lesdits premiers moyens de fixation étant appliqués de telle façon à ce que lorsque deux modules sont reliés l'un à l'autre, les moyens de fixation d'un module se trouvent face à ceux de l'autre, lesdits premiers moyens de fixation comportent au moins trois encoches (8, 9, 38) dont une est attribuée à la quatrième paroi et une autre à la cinquième paroi, lesdites encoches étant formées par un premier découpage dans le pli que forme le rebord avec sa paroi respective.

## Description

L'invention concerne un présentoir modulaire comprenant au moins deux modules de construction sensiblement similaires entre eux, chaque module étant formé par une caisse en matière plastique ayant une paroi de fond et une ouverture d'accès, qui s'étend de façon contiguë, sur une première paroi horizontale opposée à la paroi de fond et une deuxième paroi transversale, ladite caisse comprenant également une troisième paroi transversale opposée à ladite deuxième paroi, ainsi qu'une quatrième et cinquième paroi latérale, ladite troisième, quatrième et cinquième paroi étant chacune pourvue de rebords, disposés à hauteur de et orientés vers l'ouverture dans la première paroi, chaque rebord étant pourvu de premiers moyens de fixation, comprenant un premier élément de liaison, et agencés pour relier entre eux les parois de la caisse, lesdits premiers moyens de fixation étant appliqués de telle façon à ce que lorsque deux modules sont reliés l'un à l'autre, les moyens de fixation d'un module se trouvent face à ceux de l'autre.

Un tel présentoir modulaire est connu de la demande de brevet allemand n° 2303105. Il peut entre autres être utilisé pour la présentation ou le stockage d'objets les plus divers comme par exemple des livres, des disques, des produits alimentaires ou autres. Le caractère modulaire du présentoir offre l'avantage de pouvoir construire quelques variantes en reliant de diverses façons les modules entre eux. L'ouverture qui s'étend de façon contiguë sur une première et deuxième paroi permet d'une part, de donner un accès facile aux objets qui y sont rangés, et d'autre part, lorsque deux caisses successives sont montées tête-bêche, d'accroître le volume interne d'un module de présentation. La liaison entre deux caisses adjacentes est réalisée à l'aide de moyens de fixation, qui sont soit situés dans les rebords des parois verticales, soit formés par des charnières.

Un inconvénient du présentoir modulaire connu est que les moyens de fixation ne permettent pas un assemblage des différentes caisses dans un sens horizontal, autre qu'avec leur ouverture face à face. La liaison de deux caisses juxtaposées doit impérativement être réalisée par une des parois ouvertures pour permettre aux moyens de fixation de prendre prise. En effet les moyens de fixation du présentoir connu sont formés par des charnières ou des tenons et mortaises qui prennent prise dans le bord périphérique de l'ouverture. Ceci limite considérablement le nombre de variantes à réaliser pour assembler les caisses. Il est bien sûr possible de juxtaposer les caisses dans un sens horizontal, sans les relier entre eux, mais alors les caisses de différentes rangés peuvent bouger entre eux, ce qui nuit à la présentation.

L'invention a pour but de réaliser un présentoir modulaire permettant l'assemblage des caisses dans un sens horizontal et vertical, tout en limitant considérablement le nombre de variantes à réaliser.

A cette fin un présentoir modulaire suivant l'invention est caractérisé en ce que lesdits premiers moyens de fixation comportent au moins trois encoches, dont une est attribuée à la quatrième paroi et une autre à la cinquième paroi, lesdites encoches étant formées par un premier découpage dans le pli que forme le rebord avec sa paroi respective, et agencées pour y appliquer ledit premier élément de liaison. Le pli que forme le rebord et où est située l'encoche, se trouve toujours à la frontière entre deux caisses successives, qu'elles soient juxtaposées dans le sens horizontal, ou verticalement superposées. En plaçant les moyens de fixation à cet endroit, il sera donc toujours possible d'assembler deux caisses. La présence de trois encoches dont deux sont attribuées aux flancs latéraux, permet l'assemblage dans le sens horizontal, alors que l'encoche restante peut être utilisée pour assembler les caisses superposées. En effet lorsque deux caisses sont horizontalement juxtaposées avec leur deuxième paroi de front, leurs flancs latéraux sont juxtaposés. Lorsqu'elles sont assemblées avec leurs premières parois tête-bêche, les rebords sont en contact l'un avec l'autre.

Une première forme de réalisation d'un présentoir suivant l'invention est caractérisée en ce que à chaque rebord trois encoches sont attribuées. Chaque rebord et donc chacune des troisièmes, quatrièmes et cinquièmes parois peut ainsi servir de point de départ pour y assembler d'autres modules, que se soit en juxtaposition ou en superposition.

Une deuxième forme de réalisation d'un présentoir suivant l'invention est caractérisée en ce qu'au moins une des encoches possède une première configuration, formée par ledit premier découpage et un évidement dans la paroi à laquelle elle est attribuée, lequel évidement est situé dans le prolongement dudit découpage. Cette première configuration est particulièrement avantageuse pour la juxtaposition dans le sens horizontal, car elle permet au premier élément de liaison de chevaucher les caisses juxtaposées.

Une troisième forme de réalisation d'un présentoir suivant l'invention est caractérisée en ce qu'au moins une des encoches possède une deuxième configuration, formée par ledit premier découpage et un second découpage dans le rebord, situé en bordure de ladite ouverture et aligné sur le premier découpage, ledit premier et second découpage étant séparés par une barrette. Cette deuxième configuration est particulièrement avantageuse pour le montage tête-bêche, car elle permet au premier élément de liaison de prendre prise sur le rebord.

Une quatrième forme de réalisation d'un présentoir suivant l'invention est caractérisée en ce que ladite paroi de fond est pourvue de deuxièmes moyens de fixation, agencés pour relier face à face la paroi de fond d'un des modules avec celle d'un autre module. Ceci augmente les possibilités de superposition des modules, tout en restant dans la même configuration.

Une cinquième forme de réalisation d'un présentoir suivant l'invention est caractérisée en ce que lesdits deuxièmes moyens de fixation comportent une perforation centrale dans ladite paroi de fond et au moins une entaille qui est prévue sur la périphérie de ladite perforation. Les mêmes éléments de liaison peuvent ainsi être utilisés pour relier les troisièmes et les quatrièmes parois de fond.

Une sixième forme de réalisation d'un présentoir suivant l'invention est caractérisée en ce que ladite paroi de fond sur son côté destiné à entrer en contact avec celle d'un autre module, est pourvue d'un bord périphérique rehaussé, qui est décalé par rapport au contour de la paroi de fond, au moins deux côtés dudit bord périphérique étant pourvus d'une mortaise et d'un tenon, qui font partie desdits deuxièmes moyens de fixation. L'utilisation de mortaises et de tenons dans le bord périphérique rehaussé, empêche la rotation des caisses l'un par rapport à l'autre, lorsqu'elles sont montées avec leur paroi de fond tête-bêche.

Une septième forme de réalisation d'un présentoir suivant l'invention est caractérisée en ce que lesdits premiers éléments de liaison comportent un jeu de clips, agencé pour prendre prise dans lesdites encoches, lesdits clips étant dimensionnés de telle façon que lorsqu'ils sont montés sur les encoches, ils s'alignent aux dimensions dudit rebord. Le jeu de clips permet une réalisation facile et peu onéreuse des premiers éléments de liaison.

L'invention sera maintenant décrite plus en détail à l'aide des dessins qui illustrent une forme de réalisation d'un présentoir suivant l'invention. Dans les dessins :
La figure 1 illustre un exemple d'un présentoir modulaire suivant l'invention obtenu par l'assemblage de onze modules;
La figure 2 montre une vue de face d'un module faisant partie d'un présentoir suivant l'invention;
La figure 3 montre un côté d'un rebord du module;
La figure 4 respectivement 5 illustre l'assemblage par superposition respectivement par juxtaposition de deux modules;
La figure 6 montre une première réalisation d'un fond, côté intérieur, du module;
La figure 7 montre une deuxième réalisation d'un fond, côté extérieur, du module;
La figure 8 illustre une paroi d'un module;
La figure 9 montre une vue en coupe suivant la ligne IX-IX';
La figure 10 montre un exemple d'un clips d'assemblage agencé pour relier deux modules entre eux; et
La figure 11 montre une vue de face d'une autre forme de réalisation d'un module.

Dans les dessins une même référence a été attribuée à un même élément ou à un élément analogue. Le présentoir repris dans les dessins possède un certain caractère esthétique, lui donnant certaines formes et certaines dimensions. D'autres formes de réalisation sont bien entendu possibles.

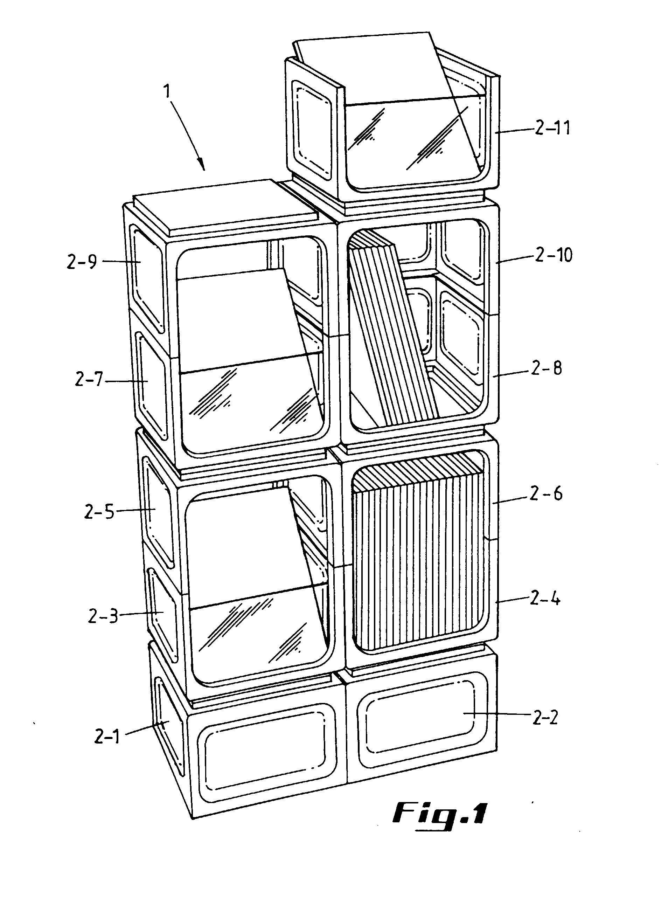

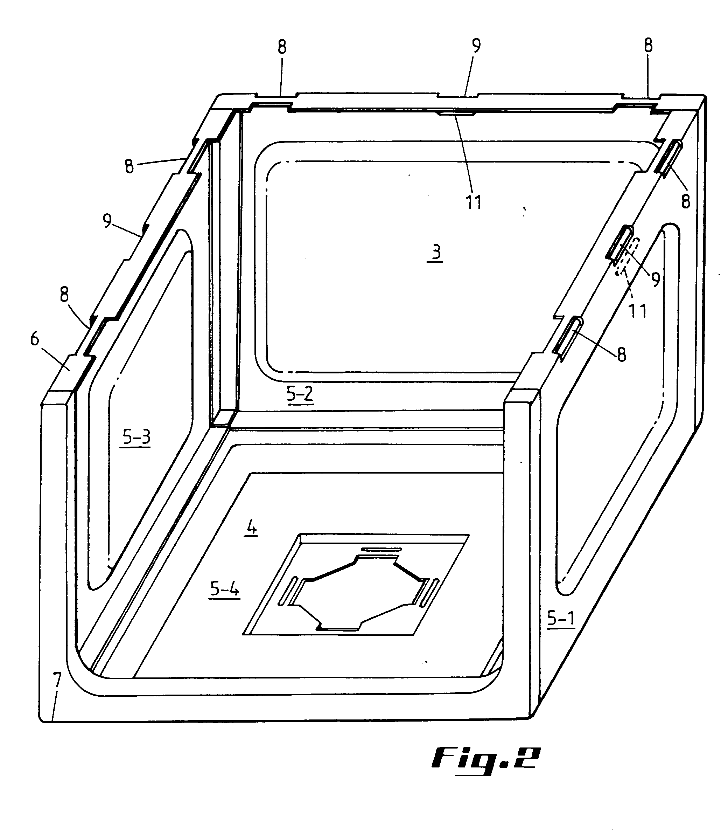

Le présentoir 1 illustré dans l'exemple repris à la figure 1 comporte onze modules 2. Chaque module 2 étant formé par une caisse en matière plastique, comme par exemple du polypropylène. Chaque module présente une ouverture d'accès, qui s'étend de façon contiguë sur une première paroi 3, située dans un plan horizontal et une deuxième paroi 4 transversale, située dans un plan vertical de la caisse, comme illustré à la figure 2. Dans le présentoir repris à la figure 1, les modules 2-3, 2-5; 2-4, 2-6; 2-7, 2-9, 2-8 et 2-10 sont montés tête-bêche, c'est-à-dire que leurs ouvertures dans le plan horizontal se trouvent face à face. Les modules 2-1, 2-3 et 2-2, 2-4 quant à eux, sont montés inversés de 180° l'un par rapport à l'autre, suivant un axe de rotation perpendiculaire au plan horizontal.

La figure 1 ne montre qu'un exemple parmi d'autres pour assembler les modules 2 afin de former le présentoir 1. Comme il sera décrit ci-dessous la construction des caisses ou modules permet de réaliser un grand nombre de variantes en partant de modules identiques. La configuration des modules est telle qu'ils peuvent facilement être assemblés pour former diverses formes de présentoirs. Ce présentoir peut servir à l'exposition ou au rangement de divers objets comme par exemple des livres, des bandes dessinées, des compact disques, etc. Dans l'exemple repris les modules 2-1 et 2-2 font office de socle, alors que les modules 2-3 à 2-11 servent au rangement même.

Chaque module est formé par une caisse comme illustré à la figure 2. Mise à part la première paroi 3 et la deuxième paroi 4, formant une ouverture contiguë, la caisse comporte également une paroi de fond 5-4 opposée à la première paroi 3, ainsi qu'une troisième paroi transversale 5-2, opposée à la deuxième paroi 4 et une quatrième 5-1 et cinquième 5-3 paroi latérale, situées dans le plan vertical de la caisse.

Les ouvertures dans les premières 3 et deuxièmes 4 parois s'étendent sur pratiquement l'ensemble de la surface de cette paroi dans l'exemple repris dans les dessins. Il est toutefois possible que cette ouverture ne s'étende que sur une partie de la surface et ceci en fonction des objets à déposer dans le présentoir. Il est néanmoins important que l'ouverture s'étende de façon contiguë sur deux parois pour permettre un accès facile à l'intérieur du présentoir, lorsque deux modules sont chaque fois montés deux à deux tête-bêche avec leur premières parois face à face.

Les parois présentant l'ouverture sont entourées d'un rebord 6, 7. Le rebord 6 est situé dans le prolongement des troisièmes, quatrièmes et cinquièmes parois et forme un angle sensiblement perpendiculaire avec sa paroi respective. Les rebords 6 et 7 sont orientés vers l'ouverture de la caisse. Le rebord 6, qui entoure l'ouverture dans la première paroi 3 et qui se trouve donc dans le plan horizontal, est pourvu de premiers moyens de fixation, comportant au moins une encoche 9 par côté, ladite encoche 9 possédant une première configuration. Dans l'exemple repris aux figures 2 à 5 le rebord 6 comporte par paroi deux encoches 8, ayant une deuxième configuration et une encoche 9 ayant une première configuration. Ces encoches servent à recevoir un premier élément de liaison, permettant de relier les modules deux par deux. Chacune des encoches 8 comporte une première partie 8-1, formée par un premier découpage dans le pli que forme le rebord 6 avec la paroi 5-i (i=1,2,3) à laquelle l'encoche est attribuée, de telle façon que ces encoches s'étendent aussi bien dans le plan horizontal que dans le plan vertical de la caisse. Chacune des encoches 8 possédant la deuxième configuration est formée par une deuxième partie 8-2, formée par un second découpage dans le rebord 6 situé en bordure de ladite ouverture dans la première paroi 3. Entre la première 8-1 et la deuxième partie 8-2 de l'encoche 8 possédant la deuxième configuration, se trouve une barrette 10 séparant les deux parties. La barrette est située à même hauteur que le rebord 6. La fonction de cette barrette 10 sera expliquée plus en détail ci-dessous.

La présence simultanée des deux configurations d'encoches sur les rebords 6 n'est pas indispensable pour la réalisation du présentoir modulaire suivant l'invention. Il suffit en effet que sur le rebord 6 de la quatrième 5-1 et cinquième 5-3 paroi latérale se trouve une seule encoche, alors qu'une troisième encoche peut se trouver soit sur le rebord attribué à la troisième paroi transversale 5-3, ou sur celui attribué à la quatrième ou cinquième paroi. Dans cette dernière forme de réalisation l'encoche peut être soit de la première soit de la deuxième configuration. Il faut toutefois noter que si le rebord de la troisième paroi 5-2 n'est pas pourvu d'encoche, une liaison avec une autre caisse à l'aide de cette dernière paroi, n'est pas possible. Dans le cas où seulement trois encoches sont prévues, elles seront de préférence attribuées de telle façon, qu'à chacune des troisièmes 5-2, quatrièmes 5-1 et cinquièmes 5-3 parois soit au moins attribuée une encoche, qui possède au moins le premier découpage dans le pli que forme le rebord 6.

L'encoche 9 possédant la première configuration est, tout comme la première partie 8-1 de l'encoche 8, formée par un premier découpage 9-1 dans le pli que forme le rebord 6 avec la paroi 5-i, à laquelle elle est attribuée. De plus l'encoche 9 comporte un évidement 11, agencé dans ladite paroi 5-i et situé dans le prolongement dudit premier découpage, à quelques millimètres du bord du découpage. Cet évidement est situé de préférence du côté intérieur de la caisse pour des raisons esthétiques. Le cas échéant, au lieu dudit évidement, il serait également possible d'aménager un autre découpage au même endroit que l'évidement.

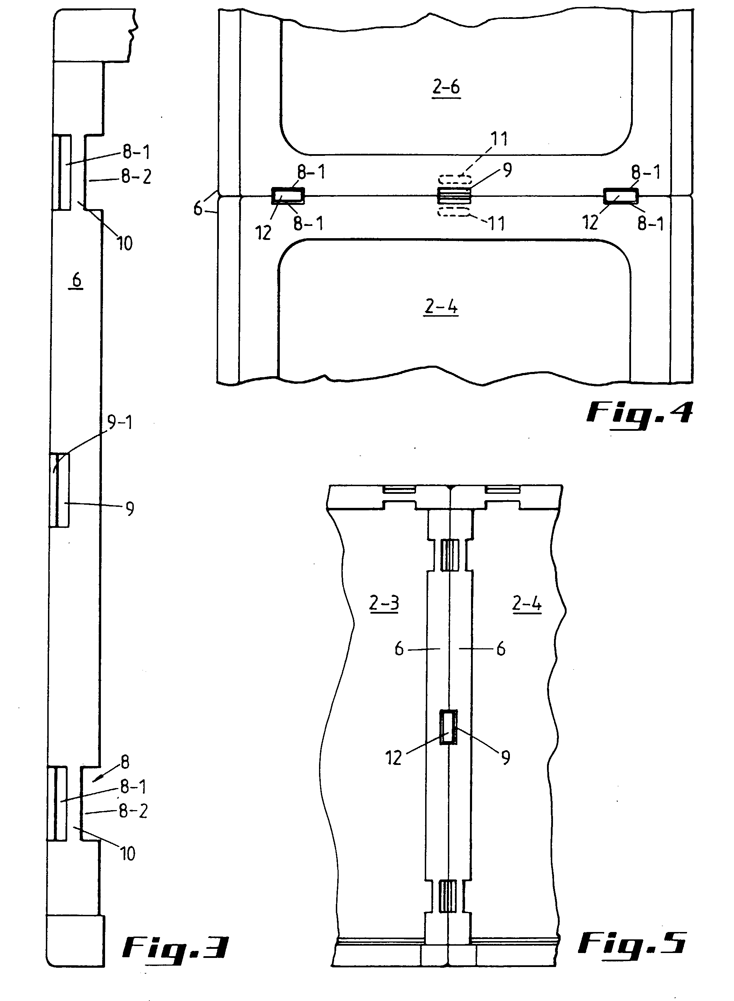

Les encoches 8 ou 9 servent à relier entre eux les caisses afin de monter le présentoir. La figure 4 illustre le montage tête-bêche avec leurs premières parois face à face de deux caisses, par exemple les caisses 2-4 et 2-6 de la figure 1. Comme mentionné au préalable les caisses 2-4 et 2-6 sont montées en les superposant de façon à ce que les ouvertures dans le plan horizontal soient face à face. Les encoches 8 et 9 sont disposées de telle façon sur le rebord que lorsque le rebord 6 de la caisse 2-4 se trouve donc en contact avec celui de la caisse 2-6, les encoches 8 et 9 des caisses 2-4 et 2-6 soient également face à face. Puisque la première partie 8-1 de l'encoche 8, s'étend dans le pli que forme le rebord 6 de la paroi 5-i à laquelle elle est attribuée, une ouverture est présente dans ces parois 5-i des caisses à hauteur des encoches 8. Cette ouverture permet d'y insérer un premier élément de liaison 12, qui relie les caisses 2-4 et 2-6 entre elles.

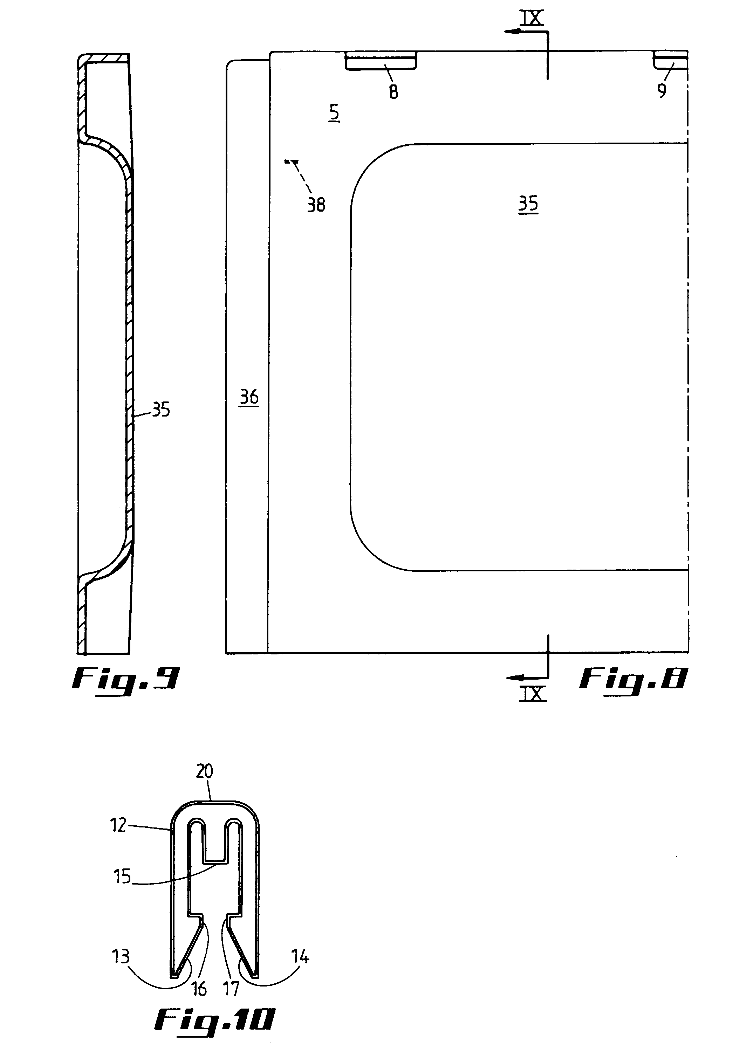

La figure 10 illustre un exemple d'un premier élément de liaison 12, servant à être introduit dans les encoches 8 et 9. Cet élément de liaison est formé par un clips dimensionné de telle façon à être inséré dans l'ouverture, formée par les encoches. Le clips comporte deux branches 13, 14 et un butoir 15. Les branches ont une extrémité de forme triangulaire, afin de faciliter leur pose dans l'encoche. En partant de l'extrémité triangulaire en direction du butoir, le clips forme des crochets 16 et 17. Lorsque deux modules sont superposés, comme illustré à la figure 4, les crochets 16 et 17 du clips sont placés dans l'encoche 8, et viennent prendre prise sur la barrette 10, alors que la tête du clips vient se loger dans la seconde partie 8-2 de l'encoche. Le butoir quant à lui vient se loger dans la première partie 8-1 de l'encoche et vient buter contre la barrette 10.

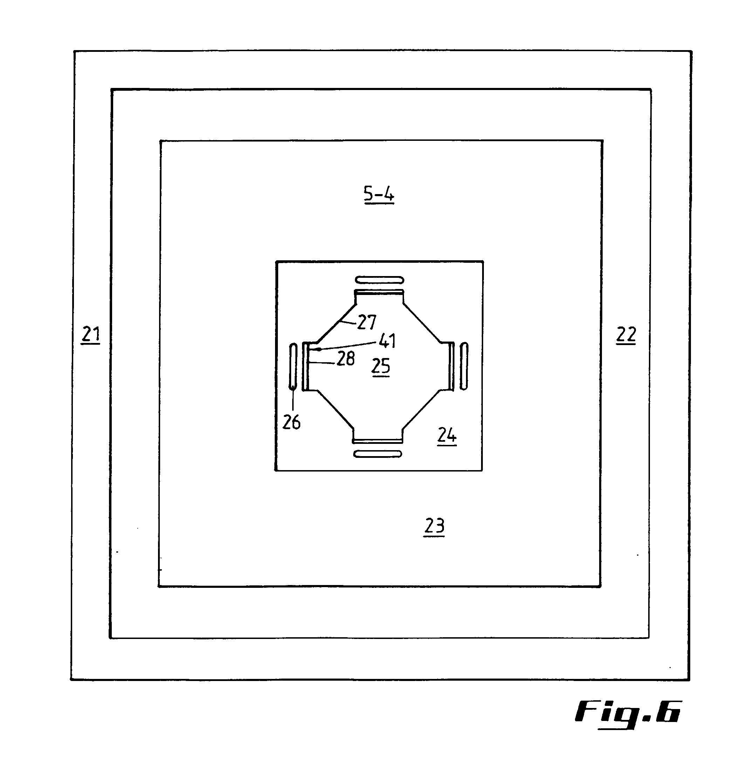

Ce même clips sert également à être posé dans l'encoche 9 ayant la première configuration, comme illustré à la figure 5. L'encoche 9 sert à relier les modules lors de leur juxtaposition dans le sens horizontal. Ainsi par exemple à la figure 5 la juxtaposition des caisses 2-3 et 2-4 de la figure 1 est reprise en détail, pour ce qui concerne le rebord supérieur. Le clips 12 vient s'insérer dans l'encoche 9 de telle façon, que les crochets 16 et 17 prennent prise dans les évidements 11 des caisses 2-3 et 2-4 respectivement. Ainsi le clips 12 relie les caisses 2-3 et 2-4 qui sont juxtaposées. Le butoir 15 vient buter contre le bord de l'encoche 9, située dans la paroi 5-i, où la juxtaposition est effectuée.

Le clips est dimensionné de telle façon que lorsqu'il est monté dans l'encoche, il s'y enfonce entièrement et son bord 20 s'aligne sur le pli entre le rebord et la paroi 5-i concernée. Ceci est valable aussi bien pour les encoches 8 ayant la première configuration, que pour les encoches ayant la deuxième configuration. Ainsi le clips ne perturbe pas ni la juxtaposition, ni la superposition des caisses, puisqu'il s'aligne aux dimensions du rebord et des parois.

Puisque les trois parois 5-1, 5-2 et 5-3 de la caisse sont pourvues d'encoches, il est possible de fixer une autre caisse à chacune des trois parois, séparément, ou de monter deux caisses tête-bêche. Un grand nombre de variantes devient ainsi possible en utilisant à chaque fois les encoches 8 et/ou 9 ainsi que les clips 12, qui sont en général livrés sous forme d'un jeu par caisse.

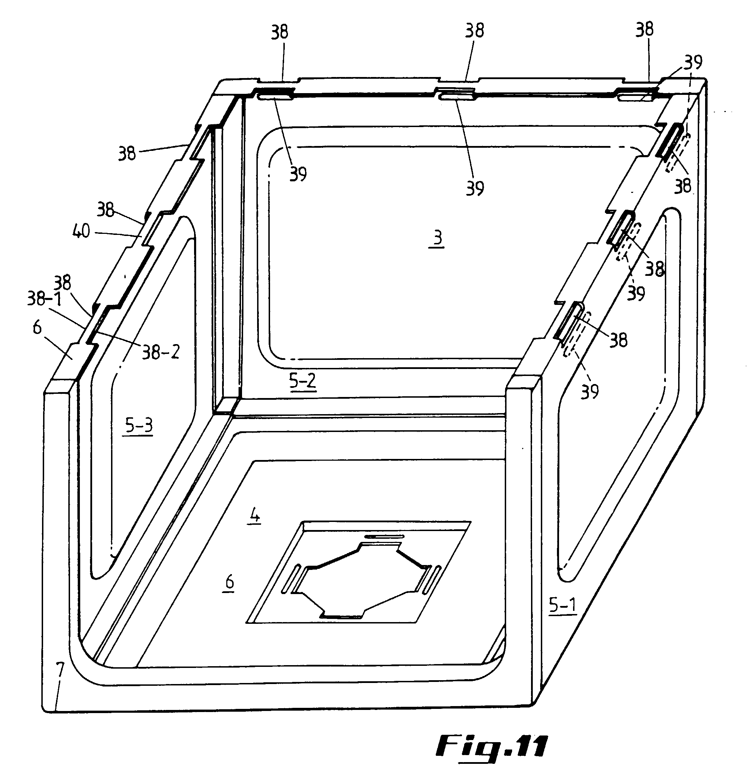

La figure 11 illustre une autre forme de réalisation d'un module suivant l'invention. Cette forme de réalisation se distingue de celle illustrée à la figure 2 en ce qu'elle est pourvue d'encoches 38, ayant une troisième configuration. Cette troisième configuration réunit les éléments de la première et deuxième configuration. Chaque encoche 38 est tout comme l'encoche 8 de la première configuration pourvue d'une première partie 38-1 et d'une deuxième partie 38-2. De plus, à côté de chaque encoche 38, il est prévu un évidement 39, qui a la même fonction que celle de l'évidement 11. Ainsi, chaque encoche sert aussi bien à la juxtaposition, qu'à la superposition des modules. Ceci facilite la fabrication des modules. Une barrette 40 est prévue entre les premières 38-1 et les deuxièmes 38-2 parties.

La figure 6 illustre en détail une forme de réalisation de la paroi de fond 5-4 côté intérieur de la caisse. La paroi de fond comporte un bord 21, qui entoure l'ensemble de la paroi, et sur lequel la troisième, quatrième et cinquième paroi s'appuient. Le bord 21 passe en une gouttière 22 de faible profondeur, par exemple entre 5 et 10 mm, afin de donner une rigidité au fond de la caisse. La gouttière 22 entoure un plateau 23, légèrement surélevé, par rapport à la gouttière. De préférence la face de ce plateau est rendue légèrement abrasive, afin d'éliminer le glissement des objets stockés. Dans ce plateau, une échancrure 24 est formée, dont le fond se trouve à même hauteur que le fond de la gouttière. Cette échancrure 24 est pourvue de deuxièmes moyens de fixation, agencés pour relier face à face la paroi de fond d'un des modules avec celle d'un autre module.

Les deuxièmes moyens de fixation comportent une perforation centrale 25 dans la paroi de fond, et au moins un autre évidement 26, ainsi qu'une entaille 41, prévue sur la périphérie de la perforation 25. Dans l'exemple illustré à la figure 6, la perforation 25 est formée par un losange, ayant sur chaque côté une entaille 41 et un autre évidement 26. Le losange comporte des flancs inclinés 27 et des flancs droits 28, qui se succèdent à chaque fois. L'entaille 41 et l'autre évidement 26 sont à chaque fois situés le long d'un flanc droit 28. L'entaille 41 et l'autre évidement 26 ont de préférence une dimension comparable à celle de l'encoche, ayant la première configuration. Ainsi le clips 12 peut également être utilisé dans les deuxièmes moyens de fixation. Chaque flanc droit se trouve décalé par rapport aux flancs inclinés qui l'entourent, de telle façon à former l'entaille et à y introduire le clips 12, illustré à la figure 10, lorsque deux caisses sont reliées à l'aide de leur paroi de fond. Les crochets 16, 17 du clips venant alors prendre prise dans l'autre évidement 26 et l'entaille 41. Puisque le clips s'insère dans l'espace entre deux flancs inclinés, il s'intègre dans la perforation 25, tout comme il s'intègre dans les encoches 8,9 et 38. Le fait que la perforation 25 se trouve dans l'échancrure 24 permet cette intégration.

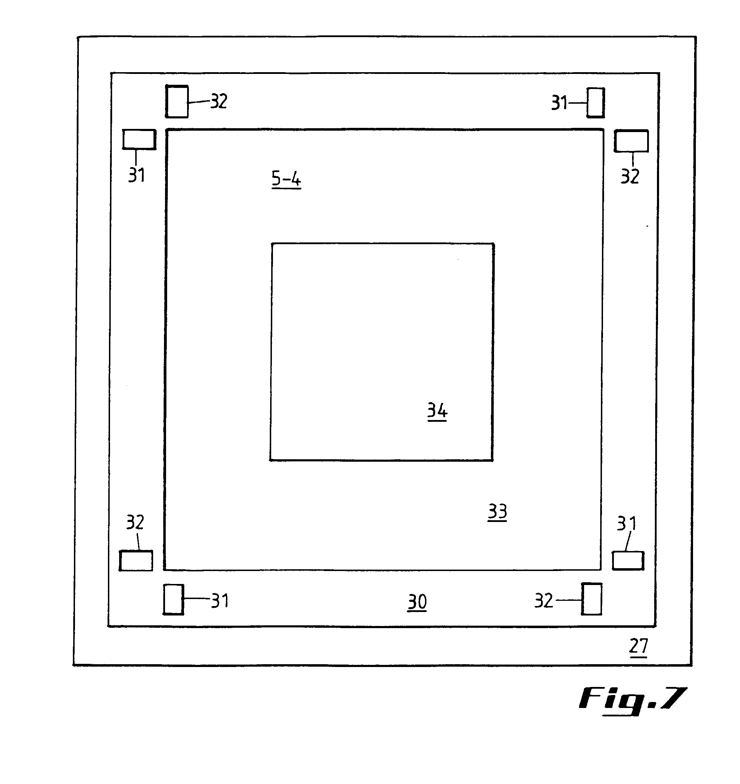

La figure 7 montre une autre forme de réalisation d'une paroi de fond d'une caisse, faisant partie d'un présentoir suivant l'invention. Contrairement à la figure 6 où le côté intérieur du fond de la caisse est illustré, c'est le côté extérieur qui est illustré à la figure 7. La paroi de fond reprise à la figure 7 comporte un premier bord périphérique 29, suivi d'un deuxième bord périphérique 30, qui est rehaussé par rapport au premier. Le deuxième bord périphérique 30 est décalé par rapport au contour de la paroi d'à peu près 10 mm, de telle façon à permettre l'introduction des doigts d'une main, lorsque l'on désire démonter les caisses, qui forment le présentoir, les unes des autres.

Sur le deuxième bord périphérique 30 se trouvent sur chaque côté une mortaise 32 et un tenon 31, qui font partie des deuxièmes moyens de fixation, permettant de relier les parois de fond de deux caisses entre elles. Un jeu de tenons et mortaises est placé de telle façon sur le deuxième bord périphérique, qu'il y ait une mortaise 32 et un tenon 31 autour de chaque angle de la paroi. Au centre de la paroi se trouve un plan 34 rehaussé par rapport au plan 33, qui forme la jonction entre le deuxième bord périphérique et le plan 34, permettant ainsi de rigidifier la paroi de fond.

Les tenons 31 et les mortaises 32 servent à relier entre elles deux caisses. Les caisses sont alors posées avec leur paroi de fond face à face, de telle façon que les tenons de l'une puissent pénétrer dans les mortaises de l'autre et vice versa. C'est le jeu d'un tenon et d'une mortaise par angle qui permet justement ce montage lorsque les caisses ont la face extérieure de leur paroi de fond face à face. Le jeu de tenon et mortaise permet en plus un montage et un démontage facile et évite la rotation de l'une caisse par rapport à l'autre, puisque le tenon est enfoncé dans la mortaise. Dans l'exemple illustré à la figure 7 il y a quatre tenons et quatre mortaises. Toutefois deux tenons et deux mortaises situés par paire sur des coins diagonalement opposés suffiraient.

Les figures 8 et 9 illustrent le fait que les parois 5-i (i = 1,2,3) sont pourvues d'une alvéole 35 qui rigidifie cette paroi. L'alvéole est obtenue en créant un creux dans la paroi comme l'illustre la vue en coupe selon la ligne IX-IX', reprise à la figure 9. Les parois 5-I comportent également une lèvre 36 permettant la liaison de ces parois entre elles. Il va de soi que les parois 5-i peuvent être coulées en une seule pièce et que suivant cette forme de réalisation, la lèvre 36 n'est pas indispensable.

De préférence, l'ouverture prévue dans la première 3 et/ou la deuxième paroi 4 est pourvue d'une vitre transparente 37, qui s'étend sur une partie, par exemple la moitié de la paroi. Cette vitre vient se poser derrière le bord périphérique 7, qui entoure l'ouverture dans la première 3 et/ou deuxième paroi 4. La vitre est retenue à l'aide d'une lamelle d'arrêt 38, agencée sur la paroi 5-i, en bordure de celle-ci, de façon à se trouver derrière le bord périphérique 7. La lamelle d'arrêt a une forme sensiblement triangulaire avec la base du triangle, face au côte intérieur du bord périphérique 7.

## Revendications

1. Présentoir modulaire comprenant au moins deux modules de construction sensiblement similaires entre eux, chaque module étant formé par une caisse en matière plastique ayant une paroi (5-4) de fond et une ouverture d'accès, qui s'étend de façon contiguë sur une première paroi (3) horizontale opposée à la paroi de fond et une deuxième paroi (4) transversale, ladite caisse comprenant également une troisième paroi (5-2) transversale opposée à ladite deuxième paroi, ainsi qu'une quatrième (5-1) et cinquième (5-3) paroi latérale, ladite troisième, quatrième et cinquième paroi étant chacune pourvue de rebords (6), disposés à hauteur de et orientés vers l'ouverture dans la première paroi, chaque rebord étant pourvu de premiers moyens de fixation comprenant un premier élément de liaison, et agencés pour relier entre eux les parois de la caisse, lesdits premiers moyens de fixation étant appliqués de telle façon à ce que lorsque deux modules sont reliés l'un à l'autre, les moyens de fixation d'un module se trouvent face à ceux de l'autre, caractérisé en ce que lesdits premiers moyens de fixation comportent au moins trois encoches (8, 9, 38) dont une est attribuée à la quatrième paroi et une autre à la cinquième paroi, lesdites encoches étant formées par un premier découpage dans le pli que forme le rebord avec sa paroi respective et agencées pour y appliquer ledit premier élément de liaison.

2. Présentoir suivant la revendication 1, caractérisé en ce que à chaque rebord des encoches sont attribuées.

3. Présentoir suivant la revendication 1 ou 2, caractérisé en ce qu'au moins une des encoches (9) possède une première configuration, formée par ledit premier découpage (9-1) et un évidement (11) dans la paroi à laquelle elle est attribuée, lequel évidement est situé dans le prolongement dudit découpage.

4. Présentoir suivant l'une des revendications 1, 2 ou 3, caractérisé en ce qu'au moins une des encoches (8) possède une deuxième configuration, formée par ledit premier découpage (8-1) et un second découpage (8-2) dans le rebord situé en bordure de ladite ouverture et aligné sur le premier découpage, ledit premier et second découpage étant séparés par une barrette (10).

5. Présentoir suivant la revendication 1 ou 2, caractérisé en ce que les encoches (38) possèdent une troisième configuration, formée par ledit premier découpage (38-1) et un évidement (39) dans la paroi à laquelle elle est attribuée, ainsi qu'un second découpage dans le rebord situé en bordure de ladite ouverture, ledit évidement et ledit second découpage (38-2) étant alignés sur le premier découpage, ledit premier et second découpage étant séparés par une barrette (40).

6. Présentoir suivant l'une des revendications 1 à 5, caractérisé en ce que ladite paroi (6) de fond est pourvue de deuxième moyens de fixations, agencés pour relier face à face la paroi de fond d'un des modules avec celle d'un autre module.

7. Présentoir suivant la revendication 6, caractérisé en ce que lesdits deuxièmes moyens de fixation comportent une perforation centrale (25) dans ladite paroi de fond (5-4) et au moins une entaille (41), qui est prévue sur la périphérie de ladite perforation.

8. Présentoir suivant la revendication 6 ou 7, caractérisé en ce que ladite paroi de fond sur son côté destiné à entrer en contact avec celle d'un autre module, est pourvue d'un bord périphérique rehaussé, qui est décalé par rapport au contour de la paroi de fond, au moins deux côtés dudit bord périphérique étant pourvus d'une mortaise et d'un tenon, qui font partie desdits deuxièmes moyens de fixation.

9. Présentoir suivant l'une des revendications 1 à 8, caractérisé en ce que lesdits premiers éléments de liaison comportent un jeu de clips agencé pour prendre prise dans lesdites encoches, lesdits clips étant dimensionnés de telle façon que lorsqu'ils sont montés sur les encoches, ils s'alignent aux dimensions dudit rebord.

10. Présentoir suivant la revendication 7, caractérisé en ce que lesdits deuxièmes moyens de fixation comportent des deuxièmes éléments de liaison, formés par un jeu de clips, agencé pour prendre prise dans lesdites entailles.

11. Présentoir suivant l'une des revendications 1 à 10, caractérisé en ce qu'en périphérie de la première et/ou de la deuxième paroi est prévue une lamelle d'arrêt, agencée pour retenir une vitre.

12. Caisse en matière plastique faisant partie d'un présentoir modulaire suivant l'une des revendications 1 à 11.
